# EUROPÄISCHE PATENTSCHRIFT

(11) **EP 0 586 899 B1**
(45) Veröffentlichungstag und Bekanntmachung des Hinweises auf die Patenterteilung: **27.11.1996**
(21) Anmeldenummer: 93112701.3
(22) Anmeldetag: 07.08.1993
(51) Int. Cl.: A22C 11/02

(54) **Darmhaltevorrichtung**
Casing holding device
Dispositif de retenue de boyaux

(30) Priorität: 05.09.1992 DE 9211979 U
(43) Veröffentlichungstag der Anmeldung: 16.03.1994
(73) Patentinhaber: VEMAG MASCHINENBAU GmbH, D-27283 Verden/Aller (DE)
(72) Erfinder: Markwardt, Klaus, D-30880 Laatzen (DE); Lendle, Erich, D-86477 Adelsried (DE)
(74) Vertreter: Eisenführ, Speiser & Partner

(56) Entgegenhaltungen:
- EP-A- 0 247 462
- DE-A- 1 507 938
- DE-A- 1 532 033
- DE-A- 2 236 081
- DE-A- 3 212 164
- DE-B- 1 195 194
- DE-U- 9 115 053
- FR-A- 2 089 747
- FR-A- 2 090 284
- FR-A- 2 253 459
- GB-A- 850 270

## Beschreibung

Die Erfindung betrifft eine Darmhaltevorrichtung für eine Maschine zum Füllen und Abdrehen von Würsten, mit einem um seine Längsachse drehbaren Füllrohr, auf das eine Darmraupe aufziehbar ist und das an seinem freien Ende mit einer Abgabeöffnung zur Abgabe von Wurstbrät versehen ist, und mit einer Darmbremse, die einen Bremsring aufweist, der das freie Ende des Füllrohres umschließt und an diesem im wesentlichen unter Preßdruck anliegt.

Darmhaltevorrichtungen dieser Art sind z.B. aus DE-A-3 212 164 bekannt. Die Darmhaltevorrichtung ist Teil einer Wurstabfüll- und Abdrehmaschine, die mit Wurstbrät beschickt wird und dieses zum Abfüllen in Wurstdärme portioniert. Während des Füllens des so verarbeiteten Wurstbrätes in den Darm wird der raupenförmig auf das Füllrohr aufgezogene Darm vom freien Ende des Füllrohres abgezogen, was durch das aus der Abgabeöffnung am freien Ende des Füllrohres ausgestoßene Wurstbrät bewirkt wird. Während des Abfüllvorganges sorgt die Darmbremse dafür, daß der Darm nur mit einer definierten gebremsten Geschwindigkeit unter definiertem Druck abgezogen und somit gespannt wird, so daß die Wurst mit der gewünschten Prallheit gefüllt wird.

Nachdem während des zuvor beschriebenen Abfüllvorganges die Wursthülle mit einer bestimmten Portion Wurstbrät gefüllt worden ist, wird das Füllrohr mit Hilfe eines Abdrehgetriebes um die eigene Achse gedreht, um eine Einschnürung des gefüllten Darmes zur Bildung der Wurst zu erzielen. Der gefüllte Darm macht wegen seiner Trägheit diese Drehbewegung nicht mit, so daß sich dann die Einschnürungen des gefüllten Darmes am Ende des Füllrohres und damit einzelne, portionierte Würste ergeben.

Der Bremsring der Darmbremse wird bei der bekannten Vorrichtung durch ein separat vorgesehenes Getriebe in Drehrichtung des Füllrohres beim Abdrehvorgang angetrieben, wodurch eine sichere Mitnahme des Darmes während des Abdrehvorganges möglich wird.

Zwar arbeitet die bekannte Darmhaltevorrichtung sowohl während des Abfüllvorganges als auch während des Abdrehvorganges zuverlässig, erfordert jedoch vergleichsweise höhere Herstellungs- und Wartungskosten, die sich teilweise für kleinere und mittlere Betriebe nicht lohnen.

Es ist daher Aufgabe der Erfindung, eine Darmhaltvorrichtung der eingangs genannten Art derart zu vereinfachen, daß sie auch für kleinere und mittlere Unternehmen kostenmäßig interessant wird.

Diese Aufgabe wird dadurch gelöst, daß bei der eingangs genannten Darmhaltevorrichtung der Bremsring unverdrehbar gelagert ist.

Durch die erfindungsgemäße unverdrehbare Anordnung des Bremsringes der Darmbremse kann nun das beim Stand der Technik für den Drehantrieb der Darmbremse vorgesehene separate Getriebe entfallen, wodurch nicht unerhebliche Herstellungs- und Wartungskosten eingespart werden können. Überraschenderweise wurde nämlich gefunden, daß die Reibung zwischen dem Füllrohr und der auf diesem sitzenden Darmraupe im allgemeinen so hoch ist, daß während des Abdrehvorganges die Darmraupe vom rotierenden Füllrohr mitgenommen wird, während der gefüllte Teil des Darmes wegen seiner vergleichsweise hohen Massenträgheit diese Drehbewegung nicht ausführt und beispielsweise nur von einer Bedienperson per Hand entsprechend gehalten und geführt zu werden braucht. Dadurch lassen sich in gleicher Weise die Einschnürungen des abgefüllten Teiles des Darmes und somit einzelne, portionierte Würste herstellen wie beim Stand der Technik, ohne daß ein aufwendiges separates Getriebe für den Drehantrieb des Bremsringes erforderlich ist.

Um eine besonders gute Haftreibung zwischen Darmraupe und Füllrohr herzustellen, sollte vorzugsweise das freie Ende des Füllrohres zumindest an seiner vom Bremsring berührten Fläche aus Material bestehen, das im wesentlichen einen höheren Reibkoeffizienten als die Innenfläche des Bremsringes besitzt. Hierzu kann beispielsweise das freie Ende des Füllrohres eine umlaufende Gummilippe aufweisen oder selbst aus Gummi bestehen und der Bremsring beispielsweise aus Metall oder einem harten Kunststoff hergestellt sein.

Ferner kann das freie Ende des Füllrohres als abnehmbare Tülle ausgebildet sein, was für Reinigungszwecke der Abgabeöffnung von Vorteil ist.

Zur Erzielung einer guten Bremswirkung kann der Bremsring mit einer konischen Innenfläche versehen sein, deren minimaler Durchmesser kleiner und deren maximaler Durchmesser größer als der maximale Außendurchmesser des Füllrohres ist. Hierzu kann auch das freie Ende des Füllrohres konisch geformt sein, wobei der minimale Durchmesser kleiner und der maximale Durchmesser größer als der maximale Innendurchmesser des Bremsringes ist.

Vorzugsweise können ebenfalls Mittel zum Einstellen des Anpreßdruckes des Bremsringes auf einen gewünschten Wert vorgesehen sein. Bei einer bevorzugten Weiterbildung dieser Ausführung, bei welcher der Bremsring mit einer konischen Innenfläche versehen und/oder das freie Ende des Füllrohres konisch geformt ist, ist als Mittel zum Einstellen des Anpreßdruckes ein Lager zur in Längsrichtung des Füllrohres verschiebbaren Lagerung des Bremsringes vorgesehen. Dadurch ist es möglich, den Bremsring mit dem gewünschten Anpreßdruck in berührenden Reibeingriff mit dem freien Ende des Füllrohres zu bringen.

Bei einer weiteren gegenwärtig besonders bevorzugten Ausführung sind außerdem Mittel zum Entraffen der auf dem Füllrohr sitzenden Darmraupe vorgesehen, wozu vorzugsweise ein Ring vorgesehen sein kann, der an der der Abgabeöffnung entgegengesetzten Seite des Bremsringes angeordnet ist und dessen Innenfläche einen solche definierten Abstand zur Außenfläche des Füllrohres aufweist, daß im wesentlichen nur eine Lage des Darmes zwischen Ring und Füllrohr durchgelassen wird.

Anstatt die gefüllte Wurst mit der Hand zu halten und zu führen, können auch Haltemittel zum unverdrehbaren Halten und Führen der gefüllten Wurst, welche insbesondere als Rollen ausgebildet sind, vorgesehen sein.

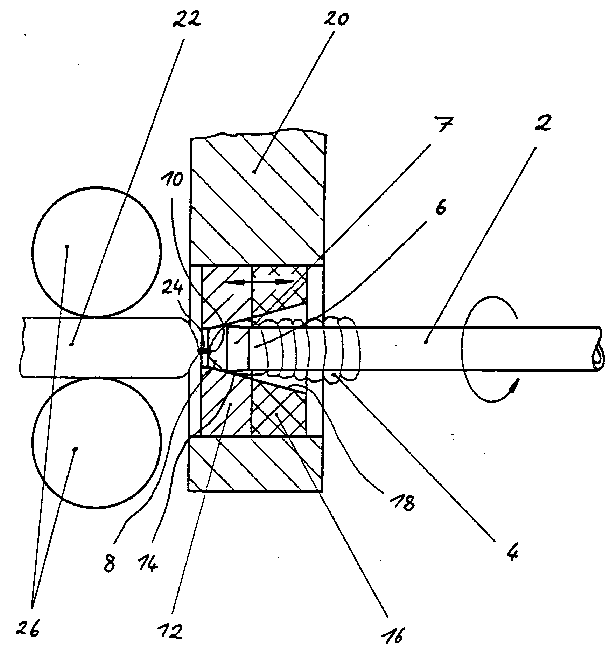

Nachfolgend wird ein bevorzugtes Ausführungsbeispiel der Erfindung anhand der beiliegenden Figur näher erläutert, in der eine Darmhaltevorrichtung im Querschnitt dargestellt ist.

Die in der Figur dargestellte Darmhaltevorrichtung ist Teil einer nicht dargestellten Wurstabfüll- und Abdrehmaschine. Diese Maschine wird im allgemeinen über einen Fülltrichter mit Wurstbrät beschickt, welches dann verarbeitet und anschließend zum Portionieren und Abfüllen in Wurstdärme durch ein in der Figur dargestelltes Füllrohr 2 ausgestoßen wird. Für das Abfüllen in Wurstdärme ist eine Darmraupe 4 vom vorderen freien Ende 6 des Füllrohres 2 her auf das Füllrohr 2 aufgezogen.

In der beiliegenden Figur ist nun die Darmhaltevorrichtung im einzelnen dargestellt.

Wie in der Figur zu erkennen ist, ist das freie Ende 6 des Füllrohres 2, auf das die Darmraupe 4 aufgezogen ist, mit einer Tülle 7 versehen, welche ein konisch spitz zulaufendes Ende 8 aufweist, in dem eine Abgabeöffnung 10 zum Ausstoß von aus der Wurstabfüll- und Abdrehmaschine durch das Füllrohr 2 gefördertem Wurstbrät ausgebildet ist. Die Tülle 7 ist für Reinigungszwecke abnehmbar und kann eine in der Figur nicht dargestellte umlaufende Gummilippe aufweisen oder selbst aus Gummi bestehen.

Die Darmhaltevorrichtung weist eine Darmbremse auf, die in der dargestellten Ausführung einen unverdrehbar gelagerten Bremsring 12 umfaßt. Der Bremsring 12 umschließt die Tülle 7 am freien Ende 6 des Füllrohres 2 und liegt an dieser unter Preßdruck an. Der Bremsring 12 besteht aus Metall und ist mit einer konischen Innenfläche 14 versehen, deren minimaler Durchmesser kleiner und deren maximaler Durchmesser größer als der maximale Außendurchmesser des Füllrohres ist.

Aufgrund der zuvor beschriebenen Anordnung ist der Bremsring 12 mit seiner konischen Innenfläche 14 in Anlage an die konische Spitze 8 der Tülle 7 bringbar, wie die Figur erkennen läßt. Dadurch, daß der Bremsring 12 in axialer Richtung des Füllrohres 2 verschiebbar gelagert ist, ist der Anpreßdruck des Bremsringes 12 auf die Tülle 7 einstellbar.

An der zum Füllrohr 2 gerichteten Stirnseite des Bremsringes 12 sitzt ein Entraffring 16, dessen Innenfläche 18 in der dargestellten Ausführung mit der konischen Innenfläche 14 des Bremsringes 12 fluchtet und somit ebenfalls konisch ausgebildet ist. Dabei weist die Innenfläche 18 des Ringes 16 einen solchen definierten Abstand zur Außenfläche des Füllrohres 2 auf, daß im wesentlichen nur eine Lage des Darmes aus der Darmraupe 4 zwischen dem Entraffring 16 und dem Füllrohr 2 in Richtung auf den Bremsring 12 (nach links gemäß der Figur) durchgeführt wird.

Der Bremsring 12 und der Entraffring 16 sind gemeinsam an einem Halteteil 20 befestigt, das so ausgebildet ist, daß der Bremsring 12 und der Entraffring 16 bei Bedarf, z.B. zu Wartungs- oder Reinigungszwecken, ausgewechselt werden können. Das Halteteil 20 ist in axialer Richtung des Füllrohres 2 verschiebbar gelagert, wodurch der Bremsring 12 in axialer Richtung verschoben und dessen Position gegenüber dem Füllrohr 2 zur Erzeugung des gewünschten Anpreßdruckes justiert werden kann.

Um neue Darmraupen aufziehen zu können, ist das Halteteil 20 mitsamt dem Bremsring 12 und dem Entraffring 16 in nicht näher dargestellter und auch hier nicht näher zu erläuternder Weise so abschwenkbar, daß das freie Ende 6 des Füllrohres 2 zugänglich wird.

Für den Füllvorgang wird nun durch eine Pumpe der Maschine Wurstbrät durch das Füllrohr 2 gedrückt und durch die Abgabeöffnung 10 in den von der Darmraupe 4 abgezogenen Teil 22 des Darmes gefüllt. Dabei gewährleistet der Entraffring 16, daß jeweils nur eine Lage des Darmes von der auf dem Füllrohr 2 aufgeschobenen Darmraupe 4 abgezogen und gleichzeitig die restliche Darmraupe 4 zurückgehalten wird, während dem Bremsring 12 die Aufgabe zukommt, für eine definierte, gebremste Abziehbewegung des Darmes zu sorgen, so daß der abgezogene Teil 22 des Darmes mit der gewünschten Prallheit gefüllt wird.

Nach dem Ausstoßen einer festgelegten Portionsmenge an Wurstbrät folgt der Abdrehvorgang. Hierzu ist das Füllrohr 2 um seine Längsachse drehbar gelagert, und das Füllrohr 2 wird während des Abdrehvorganges gedreht, um eine Einschnürung 24 der abgefüllten Portion zu erzeugen, wodurch der abgefüllte Teil 22 des Darmes zu einer fertigen Wurst hergestellt wird.

Der gefüllte Darm 22 macht wegen seiner Trägheit die Drehbewegung des Füllrohres 2 nicht mit, während dagegen die Darmraupe 4 vom Füllrohr 2 mitgenommen wird. Um die Mitnahme der Darmraupe 4 während der Rotation des Füllrohres 2 zu gewährleisten und ein Durchrutschen des Füllrohres 2 zu verhindern, besteht das freie Ende 6 des Füllrohres im allgemeinen aus einem Material, das im wesentlichen einen höheren Reibkoeffizienten als die Innenfläche 14 des Bremsringes 12 besitzt. Zu diesem Zweck sollte die Tülle 7 - wie bereits zuvor erwähnt wurde - eine umlaufende Gummilippe aufweisen oder selbst aus Gummi bestehen, während der Bremsring 12 aus Metall besteht, wobei dessen Innenfläche 14 vorzugsweise poliert sein sollte.

Während des Füllvorganges und des sich anschließenden Abdrehvorganges kann der gefüllte Teil 22 des Darmes von einer Bedienperson gehalten und geführt werden. Zur Erhöhung des Bedienkomforts sind bei der dargestellten Ausführung Halterollen 26 vorgesehen, die den gefüllten Teil 22 des Darmes sicher und unverdrehbar halten und führen.

## Patentansprüche

1. Darmhaltevorrichtung für eine Maschine zum Füllen und Abdrehen von Würsten, mit einem um seine Längsachse drehbaren Füllrohr (2), auf das eine Darmraupe (4) aufziehbar ist und das an seinem freien Ende (6) mit einer Abgabeöffnung (10) zur Abgabe von Wurstbrät versehen ist, und mit einer Darmbremse, die einen Bremsring (12) aufweist, der das freie Ende (6) des Füllrohres (2) umschließt und an diesem im wesentlichen unter Preßdruck anliegt, dadurch gekennzeichnet, daß der Bremsring (12) unverdrehbar gelagert ist.

2. Vorrichtung nach Anspruch 1,
dadurch gekennzeichnet, daß das freie Ende (6) des Füllrohres (2) zumindest an seiner vom Bremsring (12) berührten Fläche (8) aus Material besteht, das im wesentlichen einen höheren Reibkoeffizienten als die Innenfläche (14) des Bremsringes (12) besitzt.

3. Vorrichtung nach Anspruch 2,
dadurch gekennzeichnet, daß das freie Ende (6) des Füllrohres (2) eine umlaufende Gummilippe aufweist oder selbst aus Gummi besteht.

4. Vorrichtung nach Anspruch 2 oder 3,
dadurch gekennzeichnet, daß der Bremsring (12) aus Metall oder einem harten Kunststoff besteht.

5. Vorrichtung nach mindestens einem der Ansprüche 1 bis 4,
dadurch gekennzeichnet, daß das freie Ende (6) des Füllrohres (2) als abnehmbare Tülle (7) ausgebildet ist.

6. Vorrichtung nach mindestens einem der Ansprüche 1 bis 5,
dadurch gekennzeichnet, daß der Bremsring (12) mit einer konischen Innenfläche (14) versehen ist, deren minimaler Durchmesser kleiner und deren maximaler Durchmesser größer als der maximale Außendurchmesser des Füllrohres (2) ist.

7. Vorrichtung nach mindestens einem der Ansprüche 1 bis 6,
dadurch gekennzeichnet, daß das freie Ende (6) des Füllrohres (2) konisch geformt ist, wobei der minimale Außendurchmesser und der maximale Außendurchmesser größer als der maximale Innendurchmesser des Bremsringes (12) ist.

8. Vorrichtung nach mindestens einem der Ansprüche 1 bis 7,
gekennzeichnet durch Mittel zum Einstellen des Anpreßdruckes des Bremsringes (12) auf einen gewünschten Wert.

9. Vorrichtung nach Anspruch 8 sowie Anspruch 6 oder 7,
dadurch gekennzeichnet, daß als Mittel zum Einstellen des Anpreßdruckes ein Lager (20) zur in Längsrichtung dem Füllrohres (2) verschiebbaren Lagerung des Bremsringes (12) vorgesehen ist.

10. Vorrichtung nach mindestens einem der Ansprüche 1 bis 9,
gekennzeichnet durch Mittel (16) zum Entraffen der auf dem Füllrohr (2) sitzenden Darmraupe (4).

11. Vorrichtung nach Anspruch 10,
dadurch gekennzeichnet, daß als Mittel zum Entraffen ein Ring (16) vorgesehen ist, der an der der Abgabeöffnung (10) entgegengesetzten Seite des Bremsringes (12) angeordnet ist und dessen Innenfläche (18) einen solchen definierten Abstand zur Außenfläche des Füllrohres (2) aufweist, daß im wesentlichen nur eine Lage des Darmes zwischen Ring (16) und Füllrohr (2) durchgelassen wird.

12. Vorrichtung nach mindestens einem der Ansprüche 1 bis 11,
gekennzeichnet durch Haltemittel (26) zum unverdrehbaren Halten und Führen der gefüllten Wurst (22).

13. Vorrichtung nach Anspruch 12,
dadurch gekennzeichnet, daß als Haltemittel Rollen (26) vorgesehen sind.

## Claims

1. A skin holding device for a machine for filling and twisting off sausages, having a filling tube (2) which is rotatable about its longitudinal axis, onto which a caterpillar-like skin (4) may be drawn and which is provided at its free end (6) with a discharge opening (10) for discharging sausagemeat, and having a skin braking means which has a brake ring (12) which surrounds the free end (6) of the filling tube (2) and bears against the latter substantially under pressure,
characterized in that the brake ring (12) is mounted such that it cannot twist.

2. A device according to Claim 1,
characterized in that at least the surface (8) of the free end (6) of the filling tube (2) which is contacted by the brake ring (12) is of a material which has a substantially higher friction coefficient than the inside surface (14) of the brake ring (12).

3. A device according to Claim 2,
characterized in that the free end (6) of the filling tube (2) has a peripheral rubber lip or is itself of rubber.

4. A device according to Claim 2 or 3,
characterized in that the brake ring (12) is of metal or a hard plastics material.

5. A device according to at least one of Claims 1 to 4,
characterized in that the free end (6) of the filling tube (2) is constructed as a removable nozzle (7).

6. A device according to at least one of Claims 1 to 5,
characterized in that the brake ring (12) is provided with a conical inside surface (14) whereof the minimum diameter is smaller, and the maximum diameter is greater, than the maximum external diameter of the filling tube (2).

7. A device according to at least one of Claims 1 to 6,
characterized in that the free end (6) of the filling tube (2) is cone-shaped, the minimum external diameter and the maximum external diameter being greater than the maximum internal diameter of the brake ring (12).

8. A device according to at least one of Claims 1 to 7,
characterized by means for adjusting the contact pressure of the brake ring (12) to a desired value.

9. A device according to Claim 8 and Claim 6 or 7,
characterized in that there is provided as the means for adjusting the contact pressure a bearing (20) for bearing the brake ring (12) such that it is displaceable in the longitudinal direction of the filling tube (2).

10. A device according to at least one of Claims 1 to 9,
characterized by means (16) for straightening the caterpillar-like skin (4) which is on the filling tube (2).

11. A device according to Claim 10,
characterized in that there is provided as the straightening means a ring (16) which is arranged at the opposite end of the brake ring (12) to the discharge opening (10) and whereof the inside surface (18) has a defined spacing from the outside surface of the filling tube (2) such that substantially only one position of the skin is allowed between the ring (16) and the filling tube (2).

12. A device according to at least one of Claims 1 to 11,
characterized by holding means (26) for non-twistable holding and guiding of the filled sausage (22).

13. A device according to Claim 12,
characterized in that rollers (26) are provided as the holding means.

## Revendications

1. Dispositif de maintien de boyau pour une machine à remplir et tordre des saucisses, avec un tuyau de remplissage (2), qui peut tourner autour de son axe longitudinal, sur lequel un boyau en forme de chenille (4) peut être enfilé et dont l'extrémité libre (6) est munie d'une ouverture de sortie (10) pour la sortie de chair à saucisse, et avec un frein de boyau qui comporte un anneau de freinage (12) qui entoure l'extrémité libre (6) du tuyau de remplissage (2) et qui lui est appliqué globalement avec une certaine pression de serrage,
caractérisé en ce que l'anneau de freinage (12) est monté de façon à ne pas pouvoir tourner.

2. Dispositif selon la revendication 1,
caractérisé en ce que l'extrémité libre (6) du tuyau de remplissage (2) est constituée, au moins à sa surface (8) en contact avec l'anneau de freinage (12), d'un matériau qui a globalement un coefficient de frottement supérieur à celui de la surface interne (14) de l'anneau de freinage (12).

3. Dispositif selon la revendication 2,
caractérisé en ce que l'extrémité libre (6) du tuyau de remplissage (2) a une lèvre en caoutchouc circulaire ou est elle-même en caoutchouc.

4. Dispositif selon la revendication 2 ou 3,
caractérisé en ce que l'anneau de freinage (12) est en métal ou en matière plastique rigide.

5. Dispositif selon au moins l'une des revendications 1 à 4,
caractérisé en ce que l'extrémité libre (6) du tuyau de remplissage (2) est construite comme une douille (7) amovible.

6. Dispositif selon au moins l'une des revendications 1 à 5,
caractérisé en ce que l'anneau de freinage (12) est muni d'une surface interne (14) conique dont le diamètre minimal est inférieur au diamètre extérieur maximal du tuyau de remplissage (2) et dont le diamètre maximal est supérieur à ce même diamètre.

7. Dispositif selon au moins l'une des revendications 1 à 6,
caractérisé en ce que l'extrémité libre (6) du tuyau de remplissage (2) est en forme de cône, le diamètre extérieur minimal et le diamètre extérieur maximal étant supérieurs au diamètre intérieur maximal de l'anneau de freinage (12).

8. Dispositif selon au moins l'une des revendications 1 à 7,
caractérisé par des moyens pour régler la pression de serrage de l'anneau de freinage (12) à une valeur souhaitée.

9. Dispositif selon la revendication 8 et selon la revendication 6 ou 7,
caractérisé en ce que l'on prévoit comme moyens pour régler la pression de serrage un palier (20) pour le placement, qui peut être décalé dans la direction longitudinale du tuyau de remplissage (2), de l'anneau de freinage (12).

10. Dispositif selon au moins l'une des revendications 1 à 9,
caractérisé par des moyens (16) pour déplier le boyau en forme de chenille (4) placé sur le tuyau de remplissage (2).

11. Dispositif selon la revendication 10,
caractérisé en ce que l'on prévoit comme moyens de dépliage un anneau (16) qui est disposé sur le côté, opposé à l'ouverture de sortie (10), de l'anneau de freinage (12) et dont la surface interne (18) est à une telle distance de la surface externe du tuyau de remplissage (2) que, globalement, seule une couche du boyau peut passer entre l'anneau (16) et le tuyau de remplissage (2).

12. Dispositif selon au moins l'une des revendications 1 à 11,
caractérisé par des moyens de maintien (26) pour tenir et guider la saucisse pleine (22) de manière qu'elle ne puisse pas tourner.

13. Dispositif selon la revendication 12,
caractérisé en ce que l'on prévoit-comme moyens de maintien des rouleaux (26).
